(19) Europäisches Patentamt
European Patent Office
Office européen des brevets

(11) Publication number: **0 006 644**
**A2**

(12) **EUROPEAN PATENT APPLICATION**

(21) Application number: 79200253.7

(22) Date of filing: 23.05.79

(51) Int. Cl.³: C 08 L 67/06, C 08 K 5/29

(30) Priority: 26.06.78 NL 7806831

(43) Date of publication of application: 09.01.80
Bulletin 80/1

(84) Designated Contracting States: DE FR GB IT NL SE

(71) Applicant: Akzo N.V., Ijssellaan 82, NL-6800 LS Arnhem (NL)

(72) Inventor: Yntema, Klaas, Cornelis Dopperlaan 44, NL-6952 CC Dieren (NL)
Inventor: Klos, Cornelis Dirk Willem, Prinsenlaan 22, NL-6721 EC Bennekom (NL)

(74) Representative: Sieders, René et al, P.O.Box 314, NL-6800 AH Arnhem (NL)

(54) **Fire retardant, curable, ethylenically unsaturated compositions and shaped articles prepared from these compositions.**

(57) Curable, ethylenically unsaturated compositions based on an ester groups-containing compound having excellent fire retardant properties as a result of the incorporation therein of a fire retardant amount of N,N'-ethylene bis(salicylideneiminato)-FeII and/or the oxidation product derived therefrom. Preferably, use is made of a filler in an amount of 2 to 60 per cent by weight, calculated on the mixture of filler and components taking part in the curing process in the presence of said iron compound of 0,1 to 5 per cent by weight, calculated on the mixture of fire retardant additive and components taking part in the curing process. An important group of said ethylenically unsaturated compositions are unsaturated polyester resins which are copolymerized with an unsaturated monomer for use in castings, laminated products and other reinforced articles.

EP 0 006 644 A2

0006644

Akzo N.V., Arnhem

TITLE MODIFIED
see front page

AKU 1776 B

Fire retardant, curable, ethylenically unsaturated compositions.

The invention relates to fire retardant, curable, ethylenically unsaturated compositions based on an ester groups-containing compound including at least a fire retardant amount of an organic iron compound, and to shaped objects entirely or partly prepared from a material obtained by curing such compositions.

Fire retardant, curable ethylenically unsaturated compositions of the type indicated above are known from, inter alia , United States Patent Specification 4 013 815. They are unsaturated polyester resin compositions which are cured by copolymerization of an unsaturated polyester and an ethylenically unsaturated monomer. Most iron compounds mentioned in it, such as ferric acetate, ferric formate and ferrous tartrate when added in an amount of 0,55 to about 50 per cent by weight, calculated on unsaturated polyester, are found to be fire retardant only to such a degree as still requires the presence of at least 4,4% by weight of halogen, calculated on the amount of cured polyester resin.

In view of increasingly stringent demands made on industrial products, particularly as far as their effect on environment is concerned, there is found to be a very great need for unsaturated polyester resin compositions that have been made fire retardant without including halogen compounds.

The present invention provides curable, ethylenically unsaturated compositions based on an ester groups - containing compound that has been made sufficiently fire retardant without there being any need for the presence therein of halogen compounds.

The invention consists in that the organic iron compound in the curable, ethylenically unsaturated compositions of the type indicated above is

N,N'-ethylene bis(salicylidene iminato)-Fe II, and/or the oxidation product derived therefrom.

The compound N,N'-ethylene bis(salicylidene iminato)-Fe II, which in the literature has also been termed bis(salicylidene) ethylene diimino iron (II), will for the sake of brevity be referred to hereinafter as Fe(salen).

The oxidation product derived therefrom may be expressed by the formula $[Fe(salen)]_2O$. The structure of this compound is described in Coordination Chemistry Reviews, 9(1972-1973) 311-337, Elsevier Scientific Publishing Company, Amsterdam.

Fe(salen) and $[Fe(salen)]_2O$ are both soluble in ethylenically unsaturated compositions based on an ester groups-containing compound and can be readily incorporated into it as such.

The preparation may be carried out as indicated in Chemical Abstracts 49, 5186 i(1955) for the corresponding cobalt compound, use being made then of iron choride, salicylaldehyde and ethylenediamine.

It should be considered extremely surprising that whereas the iron compounds now proposed impart greatly enhanced fire retardancy to the present products upon their being cured, they have hardly any detrimental effect on curing. From the results of comparative experiments Applicant has found that for instance the ferrous and ferric acetyl acetonates mentioned in the United States Patent Specification 4 013 815, which are also known under the names 2,4-pentanedione-Fe II and 2,4-pentanedione-Fe III, do display a strongly fire retardant effect in polyester resin compositions which do not or hardly contain any halogen, but are unsuitable for the present purpose because of too rapid curing (see Table IV below). Although this drawback can be met by taking special precautions, such as encapsulation, it will be evident that such solutions will encounter a great many practical and economical drawbacks.

Of the curable, ethylenically unsaturated compositions based on an ester groups-containing compound that may be used according to the invention for the preparation of fire retardant material particularly those are suitable that are derived from a polycarboxylic compound and a polyhydric alcohol.

Within the scope of the invention polycarboxylic compounds include polycarboxylic acids, polycarboxylic anhydrides, polycarboxylic halides and polycarboxylic esters. The unsaturation may be provided in the polycarboxylic compound or in the alcohol or in both.

It is mostly found to be provided in one or more ethylenically unsaturated polycarboxylic compounds. Examples thereof include maleic acid, fumaric acid, ethylmaleic acid, itaconic acid, citraconic acid, mesaconic acid, and aconitic acid or the acid chlorides, esters or anhydrides derived therefrom.

As examples of ethylenically unsaturated alcohols may be mentioned 2-butene-1,4-diol, 2-pentene-1,5-diol and the unsaturated hydroxy ethers such as glycerol monoallyl ether and pentaerythritol diallyl ether.

The saturated polycarboxylic compounds that are suitable to be used in the preparation of the present polyester resins may be derived from an aliphatic, cycloaliphatic, aromatic or heterocyclic group.

As examples thereof may be mentioned phthalic acid, isophthalic acid, terephthalic acid, adipic acid and/or succinic acid and the acid halides, acid anhydrides and esters derived therefrom.

As examples of suitable saturated polyvalent alcohols may be mentioned ethylene glycol, diethylene glycol, propylene glycol, dipropylene glycol; 1,4-butanediol; 1,5-pentanediol; 1,6-hexanediol; 2,2,4-trimethylpentane-1,3 diol; 1,4 cyclohexane dimethanol; glycerol; mannitol; sorbitol; substituted bisphenols; 2,2-bis(4-hydroxycyclohexyl)propane and mixtures of these compounds.

Although the presence of halogen in the unsaturated compositions according to the invention is not necessary at all in order to obtain fire retardant properties, the presence in itself of halogen - for instance to obtain certain physical and/or chemical properties - clearly constitutes no reason for such compositions to fall beyond the protective scope of the present invention.

As examples of halogenated acids that may be used in the preparation of unsaturated polyesters may be mentioned tetrachlorophthalic acid and dichlorosuccinic acid.

Examples of halogenated alcohols are 2,3-difluorobutane-1,4-diol and 2,2-dichloromethyl propane-1,3-diol.

Moreover, the properties of unsaturated polyesters may still be modified by the incorporation therein of suitable monofunctional carboxylic acids and/or alcohols.

As examples of suitable alcohols may be mentioned 2,2-dichloroethanol and 1,1,1-trifluoropropane-2-ol. Examples of monofunctional acids are lauric acid and oleic acid.

Furthermore, the properties of unsaturated polyesters can be endlessly varied by the use of various types of acids and alcohols such as an unsaturated acid, a saturated acid and a saturated alcohol.
In the preparation of unsaturated polyesters the starting materials generally used are maleic acid, maleic anhydride or fumaric acid and ethylene glycol, 1,2-propylene glycol or 1,3-butane diol. In addition to using bifunctional alcohols and acids in the formation of unsaturated polyesters, compounds having a combined hydroxyl and carboxyl function may be employed. In this connection the use is mentioned of hydroxypivalic acid.

If besides bifunctional alcohols or acids a small proportion of tri-or polyfunctional compounds is allowed to take part in the condensation, some degree of branching may be obtained. As examples of these compounds may be mentioned 2,3,5,-hexane tricarboxylic acid, trimellitic acid, glycerol, trimethylol propane, pentaerythritol and tris-β-hydroxyethyl isocyanurate. In addition, the unsaturated polyesters may still contain groups other than ester groups As examples of these additional groups may be mentioned amide, imide and urethane groups Thus, the molecular weight of polyesters can still be considerably increased by reacting the terminal groups with diisocyanates. The preparation of unsaturated polyesters may take place in the melt or by azeotropic condensation. When use is made of acid anhydrides and epoxides, the preparation in the melt is effected by polyaddition. The usual procedure starts from approximately equivalent amounts of acids and alcohols, which are esterified to the desired molecular weight at 170° to 230°C. Use can be made of catalysts such as p-toluene sulphonic acid, benzene sulphonic acid and β-naphthalene sulphonic acid.

The curing of unsaturated polyesters takes place in the presence of an ethylenically unsaturated copolymerizable monomer. The monomer used then is generally styrene, or sometimes diallyl phthalate and triallyl cyanurate Other monomers that may be used in curing are α-methyl styrene, vinyl toluene, 2-chlorostyrene, 2,5-dichlorostyrene, p-divinyl benzene, methacrylic methyl ester, acrylic methyl ester, acrylic-t-butyl ester, acrylonitrile, acrylamide, triacryl formal, vinyl acetate, N-vinyl pyrrolidone, 2-vinyl pyridine, N-vinyl carbazole and mixtures of these compounds.

As suitable monomers to be used besides or instead of the above-mentioned diallyl phthalate may be mentioned, for example, one or more of the following compounds: diallyl fumarate, allyldiglycol carbonate, allyllidene diacetate, dimethallyl terephthalate, butane diol diallyl ether, glycerol diallyl ether adipate and the tetraallyl ether of tetramethylol acetylene diurea.

Besides the above-mentioned usual monomers there may still be present other copolymerizable compounds. As examples thereof may be mentioned maleimide and esters and half esters of maleic acid and fumaric acid. Several salts built up from these half esters and polyvalent metals such as, for instance, aluminium dissolve in polyester resins. This dissolution is often attended with a considerable increase in viscosity, which may be of importance as regards moulding materials. The amount of ethylenically unsaturated monomer in the mixture is so chosen that after polymerization a thermosetting polymer is obtained. Depending on the desired properties, the weight percentage of unsaturated polyester in the polyester resin may vary from 10 to 90 without the use of any further additives.

The polymerization reaction is generally started by a radicals initiating catalyst, as a result of which a cross-linked and cured polyester resin is obtained. The temperature at which the reaction is initiated is dependent on the catalyst system used. When use is made of cobalt naphthenate and methylethyl ketone peroxide curing can already be effected at room temperature. The unsaturated polyester and the ethylenically unsaturated monomer are preferably mixed at elevated temperature in order to bring about better dissolution and homogenization. To prevent premature polymerization it is preferred that prior to the mixing operation a polymerization inhibitor be included in the unsaturated polyester. Subsequently, a catalyst and, if need be, also an accelerator are added. The percentage by weight of polymerization inhibitor is generally in the range of 0,001 to 1 per cent by weight of the mixture to be polymerized. As examples of polymerization inhibitors that are successfully applied may be mentioned hydroquinone, benzoquinone, p.tert. butylcatechol, p-phenylene diamine, trinitrobenzene and picric acid.

As examples of suitable catalysts may be mentioned benzoyl peroxide, acetyl peroxide, lauryl peroxide, methylethyl ketone peroxide and cumene hydroperoxide. The amount to be used is very much dependent

on the activity and the presence of inhibitors and generally varies from 0,01 to 10 per cent by weight, calculated on the amount of resin. The polymerization reaction can also be promoted by the use of accelerators such as metals or metal salts such as cobalt octoate, cobalt maleate and cobalt naphthenate or amines such as dimethylamine, dibutylamine or mercaptans such as dodecyl mercaptan. They are generally employed in the same amount as or in a smaller amount than said catalysts.

It has been found that not only unsaturated polyesters, but also compositions based on an ethylenically unsaturated ester having the general formula

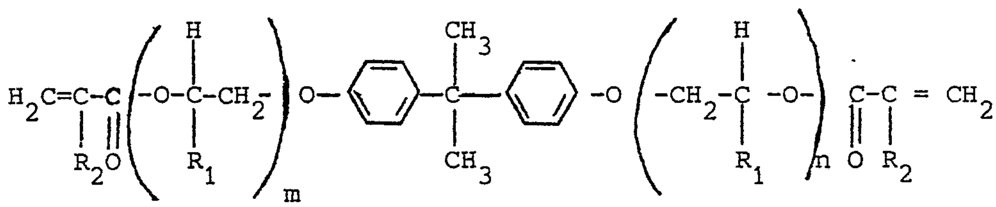

where $R_1$ and $R_2$ may be the same or different and represent a hydrogen atom and/or a methyl group, and m and n are numbers which are on an average in the range of 1,0 to 3,0, are suitable for the preparation of fire retardant material according to the present invention.

It is preferred, however, that, as the ethylenically unsaturated ester 2,2-bis-(p-(β-hydroxyethoxy)phenyl) propane dimethacrylate should be used.

Curing is effected in a manner corresponding to the one indicated above for unsaturated polyesters, use being made of a radical initiator such as a peroxidic compound, an azo compound or a compound such as hexaphenyl ethane or 1,2-diphenyl-1,2-dicyanoethane-1,2-dicarboxylic dimethyl ester. It is preferred that use should be made of radical initiators which are applicable at temperatures in the range of $60^{o}$ to $175^{o}C$, and preferably in the range of $120^{o}$ to $160^{o}C$. As indicated above for unsaturated polyesters, curing also may take place at lower temperatures in the presence of the above-envisaged initiators in combination with polymerization accelerators such as cobalt octoate or amines such as dimethyl aniline. Curing also may be effected by means of UV radiation in the presence of UV-initiators, or by irradiation with accelerated electrons.

The organic iron compounds Fe (salen) and/or $[Fe\ (salen)]_2O$ can be incorporated into one or more of the reaction components at any

moment prior to curing.

It has been found that along with other desired properties sufficient fire retardancy can be obtained if the iron compound is used in an amount of 0,1 to 10 per cent by weight, calculated on the mixture of fire retardant additive and components participating in the curing process. It is also possible, however, to use concentrations of the order of, say, 15 or 20 per cent.

The concentration at which the best fire retardancy is obtained is very much dependent on the composition of the cured compositions. It will not be difficult for a man skilled in the art to establish the optimum range within which maximum protection against fire is obtained.

It has been found that this range may still be dependent on whether use is made of a filler.

Suitable fillers include various metal oxides, glass fibres, asbestos fibres, mica,colemanite, powdered chalk, powdered quartz, powdered aluminium mica, aluminium oxide, aluminium hydroxide, aluminium sulphate, wollastonite, ground and precipitated chalk, magnesium carbonate, kaolin, titanium dioxide and talc. It has further been found that the presence of antimony trioxide, which is often employed as a synergist in fire retardant additives to polymers, produces an opposite effect here. The concentration of fillers to be incorporated into the curable compositions is dependent on many factors, among which not only physical but also economical ones. The best fire retardant properties are generally obtained when the filler is used in an amount of 2 to 60% by weight, calculated on the mixture of filler and components participating in the curing process in the presence of an iron compound used in an amount of 0,1 to 5% by weight, calculated on the mixture of fire retardant additive and components participating in the curing process. It has been found that a distinctly synergistic effect may result from the use of said combination of substances. For a number of applications the aim will be a cured composition having optimum fire retardant properties obtained at a minimum filler concentration. To that end the invention provides a curable composition containing a filler in an amount of 5 to 20%, calculated on the mixture of filler and components taking part in the curing process in the presence of an amount of iron compound of 0,1 to 3,5 per cent by weight, calculated

on the mixture of iron compound and components taking part in the curing process.

The invention is illustrated but not limited by the following examples.

The fire retardant properties obtained in these examples were determined by measuring the Oxygen Index (OI) in conformity with ASTM D 2863-70, unless otherwise indicated. The higher the OI obtained, the more fire retardant is the cured composition.

The resins used in the examples were composed as follows

Resin 1 : An unsaturated polyester was prepared from 15,2 parts by weight of phthalic anhydride; 23,5 parts by weight of maleic anhydride and 27,3 parts by weight of propylene glycol. The resulting product was mixed with 34 parts by weight of styrene, 2 parts by weight of a 50% by weight solution in water of methyl ethyl ketone peroxide and 0,5 parts by weight of 1% by weight solution in water of cobalt octoate. Curing for 24 hours at 20°C was followed by after-curing for 2 hours at 120°C.

Resin 2: The unsaturated polyester for this resin was prepared from 22,1 parts by weight of phtalic anhydride; 14,6 parts by weight of maleic anhydride; 21,6 parts by weight of propylene glycol and 4,8 parts by weight of diethylene glycol. The unsaturated polyester obtained with these components was mixed with 36,9 parts by weight of styrene; 2 parts by weight of a 50% by weight solution in water of methyl ethyl ketone peroxide and 0,5 parts by weight of a 1% by weight solution in water of cobalt octoate. Curing was effected in the manner indicated under Resin 1.

Resin 3 : The unsaturated polyester was prepared from 19,7 parts by weight of isophthalic acid; 11,6 parts by weight of maleic anhydride and 24,7 parts by weight of neopentyl glycol. The unsaturated polyester thus obtained was mixed with 44 parts by weight of styrene, 2 parts by weight of a 50% by weight solution in water of methyl ethyl ketone peroxide and 0,5 parts by weight of a 1% by weight solution in water of cobalt octoate. Curing was effected as indicated for Resin 1.

Resin 4: This resin was prepared by radical polymerization of 100 parts of 2,2-bis-(p-(β-hydroxy-ethoxy)-phenyl) propane dimethacrylate in the presence of 2 parts of a 40% by weight solution in water of dibenzoyl peroxide. Curing took place at a temperature of 70°C and lasted 24 hours, followed by after-curing for 2 hours at 120°C.

Resin 5: The unsaturated polyester for this resin was prepared from 9,8 parts by weight of maleic anhydride; 14,8 parts by weight of phthalic anhydride; 6,8 parts by weight of ethylene glycol and 8,7 parts by weight of 1,2-propanediol. Of the unsaturated polyester thus obtained 65 parts by weight were mixed with 35 parts by weight of styrene, 2 parts by weight of a 50% by weight solution in water of methyl ethyl ketone peroxide and 0,5 parts by weight of a 1% by weight solution in water of cobalt octoate. Curing was carried out as indicated under Resin 1.

The resin compositions mentioned in the following examples were invariably obtained by thoroughly mixing the fire retardant additives along with fillers, when used, into a mixture of the unsaturated compositions.
It was then found that the Fe (salen) and the oxidation product $[Fe(salen)]_2O$ completely dissolved in the mixture. After the required cross-linking agents had been added, the resin compositions were cured in glass vessels having the dimensions standardized for OI (Oxygen Index) bars in accordance with ASTM D2863-70.
The results are given in the tables.
The concentrations of additives in the form of fire retardant compound and filler are expressed in grammes of additive per 100 grammes of resin (i.e. the components taking part in the curing process plus additive.

Example I
Of the above-mentioned 5 resins the Oxygen Index as a function of the Fe (salen) concentration was determined.
The results are listed in the following table.

TABEL I

| Resin No. | Amount of Fe (salen) in g per 100 g mixture | Oxygen Index (OI) | | Δ OI |
|---|---|---|---|---|
| | | Resin | Resin+ Fe(salen) | |
| 1 | 0,32 | 18,7 | 22,9 | 4,2 |
| | 1,61 | 18,7 | 22,0 | 3,3 |
| | 3,22 | 18,7 | 22,6 | 3,9 |
| | 6,44 | 18,7 | 22,1 | 3,4 |
| | 9,67 | 18,7 | 20,9 | 2,2 |
| 2 | 0,32 | 19,0 | 20,1 | 1,1 |
| | 1,61 | 19,0 | 24,2 | 5,2 |
| | 3,22 | 19,0 | 26,8 | 7,8 |
| | 6,44 | 19,0 | 24,1 | 5,1 |
| | 9,67 | 19,0 | 22,7 | 3,7 |
| 3 | 0,32 | 19,4 | 21,0 | 1,6 |
| | 1,61 | 19,4 | 23,0 | 3,6 |
| | 3,22 | 19,4 | 22,5 | 3,1 |
| | 6,44 | 19,4 | 22,5 | 3,1 |
| | 9,67 | 19,4 | 22,4 | 3,0 |
| 4 | 0,32 | 17,7 | 24,3 | 6,6 |
| | 1,61 | 17,7 | 24,5 | 6,8 |
| | 3,22 | 17,7 | 23,5 | 5,8 |
| | 6,44 | 17,7 | 23,0 | 5,3 |
| | 9,67 | 17,7 | 20,3 | 2,6 |
| 5 | 0,32 | 18,5 | 20,0 | 1,5 |
| | 1,61 | 18,5 | 22,0 | 3,5 |
| | 3,22 | 18,5 | 24,9 | 6,4 |
| | 6,44 | 18,5 | 23,9 | 5,4 |
| | 9,67 | 18,5 | 22,7 | 4,2 |

Example II

The following table gives the results of experiments with 1,61 g Fe(salen) per 100 g resin No 3 plus Fe(salen), to which also 10 g filler per 100 g mixture had been added.

TABLE II

| Filler | Oxygen Index | | | |
|---|---|---|---|---|
| | Resin No. 3 | Resin+Fe (salen) | Resin+ filler | Resin+Fe(salen) + filler |
| Talc | 19,4 | 23,0 | 19,4 | 27,3 |
| Wollastonite $(CaSiO_3)_3$ | 19,4 | 23,0 | 19,4 | 27,4 |
| $CaCO_3$ | 19,4 | 23,0 | 20,3 | 25,0 |
| Mica | 19,4 | 23,0 | 20,4 | 25,4 |
| $TiO_2$ | 19,4 | 23,0 | 20,8 | 25,3 |

The above table clearly demonstrates the considerable synergistic effect produced on the one hand as a result of the indicated amounts of Fe(salen) and on the other hand as a result of the various fillers.

Example III

In this example the results are given of a number of OI-measurements on the Resins 2 and 3, use having been made of varying amounts of Fe(salen) and filler.

The results are listed in the following table.

Table III

| Resin No. | Amount of Fe(salen in g per 100 g mixture of Fe(salen)+resin | Amount of talc in g per 100 g resin+talc | Oxygen Index | | | |
|---|---|---|---|---|---|---|
| | | | Resin | Resin+ Fe(salen) | Resin+ talc | Resin+ Fe(salen) +talc |
| 2 | 2,0 | 10,0 | 19,0 | 25,6 | 19,0 | 26,4 |
| | 2,0 | 40,0 | 19,0 | 25,6 | 21,0 | 23,4 |
| | 5,0 | 10,0 | 19,0 | 24,0 | 19,0 | 25,0 |
| | 5,0 | 40,0 | 19,0 | 24,0 | 21,0 | 22,5 |
| | 10,0 | 10,0 | 19,0 | 22,0 | 19,0 | 23,2 |
| | 10,0 | 40,0 | 19,0 | 22,0 | 21,0 | 24,6 |
| 3 | 2,0 | 10,0 | 19,4 | 25,4 | 19,4 | 28,3 |
| | 2,0 | 40,0 | 19,4 | 25,4 | 20,8 | 26,5 |
| | 5,0 | 10,0 | 19,4 | 23,0 | 19,4 | 25,0 |
| | 5,0 | 40,0 | 19,4 | 23,0 | 20,8 | 25,8 |
| | 10,0 | 10,0 | 19,4 | 21,6 | 19,4 | 23,6 |
| | 10,0 | 40,0 | 19,4 | 21,6 | 20,8 | 24,0 |

Example IV (comparative example)

In this example the results are given of experiments on the one hand with Fe(salen) and on the other hand with other bis(salicylidene) ethylene diimino metal compounds. Moreover, the results are included obtained with other known iron compounds.

The various data are listed in the following table.

The compounds mentioned therein are referred to by their trivial names, the term Co(salen) referring to the cobalt compound, the term Ni(salen) to the nickel compound, and the term Mn(salen) to the manganese compound.

In all cases the concentration of the fire retardant additive was 2 grammes per 100 grammes of resin plus additive.

The filler was talc. Its concentration was 10 g per 100 g of resin plus filler.

Table IV

| Resin | Fire retardant compound | Oxygen Index | | | | Notes |
|---|---|---|---|---|---|---|
| | | Resin | Resin +talc | Resin+fire retardant additive | Resin+talc +fire retardant additive | |
| 2 | Fe(salen) | 19,0 | 19,0 | 25,6 | 26,4 | according to invention |
| | Mn(salen) | 19,0 | 19,0 | 19,2 | - | |
| | Ni(salen) | 19,0 | 19,0 | 19,2 | - | |
| | Co(salen) | 19,0 | 19,0 | 18,9 | - | |
| 3 | Fe(salen) | 19,4 | 19,4 | 25,4 | 28,3 | according to invention |
| | Mn(salen) | 19,4 | 19,4 | 20,0 | 22,3 | |
| | Ni(salen) | 19,4 | 19,4 | 20,4 | 20,8 | |
| | Co(salen) | 19,4 | 19,4 | 19,4 | 21,0 | |
| 2 | $Fe_2O_3$ | 19,0 | 19,0 | 20,7 | - | |
| | Ferrooxalate 2 $H_2O$ | 19,0 | 19,0 | 19,2 | - | |
| | Ferric phosphate | 19,0 | 19,0 | 18,7 | - | |
| | EDTA-Fe(III) Na | 19,0 | 19,0 | 19,7 | - | |
| | 2,4-pentane dione Fe(III) | 19,0 | 19,0 | 23,6 | - | unsuitable for use because of too rapid curing |
| | 2,4-pentane dione Fe(II) | 19,0 | 19,0 | 20,0 | | |
| | Ferric citrate | 19,0 | 19,0 | 19,0 | - | |
| | Ferrocene | 19,0 | 19,0 | - | - | unsuitable because of inhibiting effect on curing reaction |
| | Basic ferric acetate | 19,0 | 19,0 | 21,3 | - | |

Table IV (continued)

| Resin | Fire retardant compound | Oxygen Index | | | | Notes |
|---|---|---|---|---|---|---|
| | | Resin | Resin+ talc | Resin+fire retardant additive | Resin+talc +fire retardant additive | |
| 3 | $Fe_2O_3$ | 19,4 | 19,4 | 21,0 | 22,0 | |
| | Ferrooxalate $2H_2O$ | 19,4 | 19,4 | 19,5 | 20,6 | |
| | Ferric phosphate | 19,4 | 19,4 | 19,0 | 20,2 | |
| | EDTA-Fe(III) Na | 19,4 | 19,4 | 21,2 | 23,5 | |
| | 2,4-pentane-dione-Fe(II) | 19,4 | 19,4 | 24,0 | 24,6 | unsuitable because of too rapid curing. |
| 3 | 2,4-pentane-dione-(Fe III) | 19,4 | 19,4 | 25,5 | 26,8 | unsuitable because of too rapid curing |
| | Ferric citrate | 19,4 | 19,4 | 20,0 | 20,4 | |
| | Ferrocene | 19,4 | 19,4 | 24,4 | 25,3 | unsuitable because of inhibiting effect on curing reaction |
| | Basic ferric acetate | 19,4 | 19,4 | 20,6 | 21,9 | |

The results mentioned in the above table clearly show that the use of Fe(salen) as fire retardant additive in curable ethylenically unsaturated compositions based on a compound containing ester groups unexpectedly leads to far better results than obtained with other known iron compounds.

1. A curable, ethylenically unsaturated composition based on an ester groups-containing compound including at least a fire retardant amount of an organic iron compound, characterized in that the organic iron compound is N,N'-ethylene bis(salicylideneiminato)-FeII and/or the oxidation product derived therefrom.

2. A curable composition according to claim 1, characterized in that the amount of iron compound is in the range of 0,1 to 10 per cent by weight, calculated on the mixture of fire retardant additive and components taking part in the curing process.

3. A curable composition according to claim 1 or 2 in which also a filler has been included, characterized in that the amount of filler is 2 to 60 per cent by weight, calculated on the mixture of filler and components taking part in the curing process in the presence of an amount of iron compound of 0,1 to 5 per cent by weight, calculated on the mixture of fire retardant additive and components taking part in the curing process.

4. A curable composition according to claim 3, characterized in that the filler is used in an amount of 5 to 20% by weight, calculated on the mixture of filler and components taking part in the curing process in the presence of an amount of iron compound of 0,1 to 3,5 per cent by weight, calculated on the mixture of iron compound and components taking part in the curing process.

5. A curable composition according to one or more of the preceding claims, characterized in that the ester groups-containing compound is an unsaturated polyester.

6. A curable composition according to claim 5, characterized in that the composition also contains an ethylenically unsaturated monomer which is copolymerizable with the unsaturated polyester.

7. A curable composition according to one or more of the claims 1-4, characterized in that the ester groups-containing compound is an ethylenically unsaturated ester of the general formula:

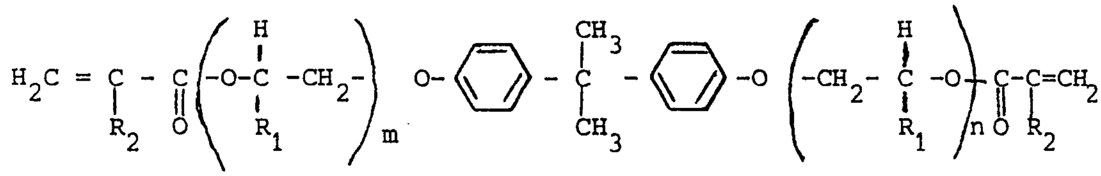

where $R_1$ and $R_2$ may be the same or different and represent a hydrogen atom and/or a methyl group, and m and n are numbers which are on an average in the range of 1,0 to 3,0.

8. Shaped articles, entirely or partly prepared from a material obtained by subjecting an ethylenically unsaturated composition based on an ester groups-containing compound and an organic iron compound according to one or more of the preceding claims to a curing treatment known in itself.